Europäisches Patentamt

European Patent Office

Office européen des brevets

(11) Veröffentlichungsnummer: **0 198 414 B1**

# (12) EUROPÄISCHE PATENTSCHRIFT

(45) Veröffentlichungstag der Patentschrift: **17.07.91**

(51) Int. Cl.5: **F02M 31/12, F02M 37/22**

(21) Anmeldenummer: **86104872.6**

(22) Anmeldetag: **09.04.86**

(54) **Vorrichtung zum Vorwärmen von Flüssigkeiten, insbesondere von flüssigen Brenn- oder Kraftstoffen.**

(30) Priorität: **18.04.85 DE 3514053**

(43) Veröffentlichungstag der Anmeldung:
**22.10.86 Patentblatt 86/43**

(45) Bekanntmachung des Hinweises auf die
Patenterteilung:
**17.07.91 Patentblatt 91/29**

(84) Benannte Vertragsstaaten:
**AT FR GB SE**

(56) Entgegenhaltungen:
**EP-A- 0 021 106      EP-A- 0 155 839
FR-A- 712 522         GB-A- 2 114 409
US-A- 2 066 480       US-A- 2 375 649
US-A- 4 539 108**

**AUTOMOTIVE ENGINEERING, Band 91, Nr. 2,
Februar 1983, Seite 79, Dallas, Texas, US; D.
SCOTT: "Diesel oil heater prevents "frozen"
stoppages"**

(73) Patentinhaber: **Lacrex S.A.
Via Eco, 53
CH-6644 Orselina (TI)(CH)**

(72) Erfinder: **Pasbrig, Max
Via Eco
Ch-6644 Orselina(CH)**

(74) Vertreter: **Hain, Leonhard, Dipl.-Ing.
Tal 18/IV
W-8000 München 2(DE)**

## Beschreibung

Die Erfindung betrifft eine Vorrichtung zum Erwärmen von Flüssigkeiten, insbesondere von flüssigen Brenn- oder Kraftstoffen, gemäß dem Oberbegriff des Patentanspruches 1.

Bei einer Vorrichtung dieser Art (FR-PS 712 522) sind ein Heiztopf und ein Leittopf so ineinander angeordnet, daß der auf seiner Innenseite mit einem elektrisch beheizten zylindrischen Flächenheizelement ausgerüstete Heiztopf einen Innenraum umschließt, während der äußere Leittopf mit seinen nach innen gerichteten schraubenförmig verlaufenden Leitrippen am inneren Heiztopf anliegt und mit ihm einen schraubenförmigen Durchflußkanal für die zu erwärmende Flüssigkeit bildet. Der Leittopf ist außen von einem Isolierwand-Topf umgeben. Das Heizelement des inneren Heiztopfes ist gegen den Innenraum von einem Porzellanzylinder abgedeckt, in dem eine Rohrschlange verlegt ist, durch die die zu erwärmende Flüssigkeit strömt, bevor diese unten in den Durchflußkanal eintritt und diesen oben durch einen seitlich wegführenden Austrittsstutzen wieder verläßt. Die beiden ineinanderliegenden Töpfe sind oben durch einen Aufschraubring verbunden. Bei diesem bekannten Flüssigkeitsvorwärmer gelangt die zu erwärmende Flüssigkeit erst nach dem Durchfluß durch die Rohrschlange in die eigentliche Heizzone. Trotz der langen Vorwärmung in dieser Rohrschlange wird es zu keinem fühlbaren Anwärmen kommen, weil die Rohrschlange durch einen Porzellanzylinder vom Heizelement abgeschirmt ist und der zudem großkalibrige Innenraum nach außen offen ist. Die lange Durchflußstrecke ist auch deshalb von Nachteil, weil dadurch die Gefahr, daß der Flüssigkeitsstrom unterbrochen wird, erhöht wird. Diese Gefahr ist vor allem dann groß, wenn, wie bei Brennkraftmaschinen, die Entnahme häufig und in weiten Bereichen wechselt. Die bekannte Vorwärmvorrichtung ist außerdem aufwendig und kompliziert im Aufbau und daher auch aus diesem Grunde nicht wirtschaftlich einsetzbar.

Der Erfindung liegt daher die Aufgabe zugrunde, eine Vorrichtung zum Erwärmen von insbesondere flüssigen Brenn- oder Kraftstoffen zu schaffen, die sich durch einen einfachen und günstigen Aufbau auszeichnet, der eine intensive, gleichmäßige und störungsfreie Erwärmung auch kleinster Flüssigkeitsmengen gewährleistet und der außerdem die Möglichkeit für eine weitere Behandlung der Flüssigkeit bietet.

Diese Aufgabe wird mit einer Vorrichtung nach dem Oberbegriff des Patentanspruches 1 erfindungsgemäß durch die kennzeichnenden Merkmale dieses Patentanspruches gelöst.

Durch die Anordnung des Leittopfes im Innern des Heiztopfes kann dieser Leittopf von einer dünnen Blechwand mit eingepreßten Leitrippen gebildet sein, durch die die aufgenommene Wärme direkt an den Innenraum abgegeben werden kann. Auch ein äußerer Heiztopf läßt sich einfacher gestalten und vor allem gegen Wärmeverluste besser isolieren. Dadurch, daß ein Deckel mit einem Zufluß- und einem Abflußkanal für die beiden Töpfe vorgesehen ist, wird die Flüssigkeit von oben zuerst durch den Heizraum für eine Intensiverwärmung und anschließend durch eine Bodenöffnung im Leittopf in das Leittopfinnere geschickt. Dieser zylindrische Innenraum weist schon aus konstruktiven Gründen einen gewissen Durchmesser auf, so daß für die angewärmte Flüssigkeit ein Sammelraum entsteht, in dem sie allmählich hochsteigt und oben durch den Deckel wieder abfließen kann. Da dieser Innenraum auf voller Höhe von dem erwärmten Leittopf umgeben ist, verliert die Flüssigkeit darin nicht an Wärme. Die im Innenraum angesammelte Flüssigkeit wirkt außerdem als Puffer, um Strömungsunterbrechungen zu verhindern. Dies ermöglicht andererseits wiederum einen sehr engen Durchflußkanal, in dem die Flüssigkeit auch bei begrenztem Energieeinsatz rasch auf die gewünschte Temperatur angewärmt wird. Schließlich läßt sich der durch die erfindungsgemäße Ausführungsform freigehaltene Innenraum noch so ausbilden, daß darin ein zweckmäßig handelsüblicher Filtereinsatz untergebracht werden kann. Weil sowohl die Zufluß- und Abflußanschlüsse im abschraubbaren Deckel untergebracht sind, kann der Wärmetauschertopf ohne Lösen von Anschlußleitungen abgenommen und nach einer eventuellen Reinigung, Austausch des Filters usw., wieder anmontiert werden. Die Herstellung dieses Wärmetauscher-Topfes ist besonders einfach und preiswert, da sich sämtliche Gehäuse- und Isolierungselemente in zweckmäßiger Topfform fertigen bzw. formen lassen.

Die Erfindung wird nachfolgend anhand eines Ausführungsbeispiels, das auch in der Zeichnung schematisiert dargestellt ist, näher beschrieben. Es zeigen:

Fig. 1    einen Vertikalschnitt nach der Linie I-I der Fig. 2 durch einen topfförmigen Vorwärmer,

Fig. 2    eine Draufsicht hierzu, teilweise geschnitten nach der Linie II-II der Fig. 1,

Fig. 3    einen vergrößerten Schnitt eines Detail-Auszuges III der Fig. 1 und

Fig. 4    einen vergrößerten Schnitt eines Detail-Auszuges IV der Fig. 1.

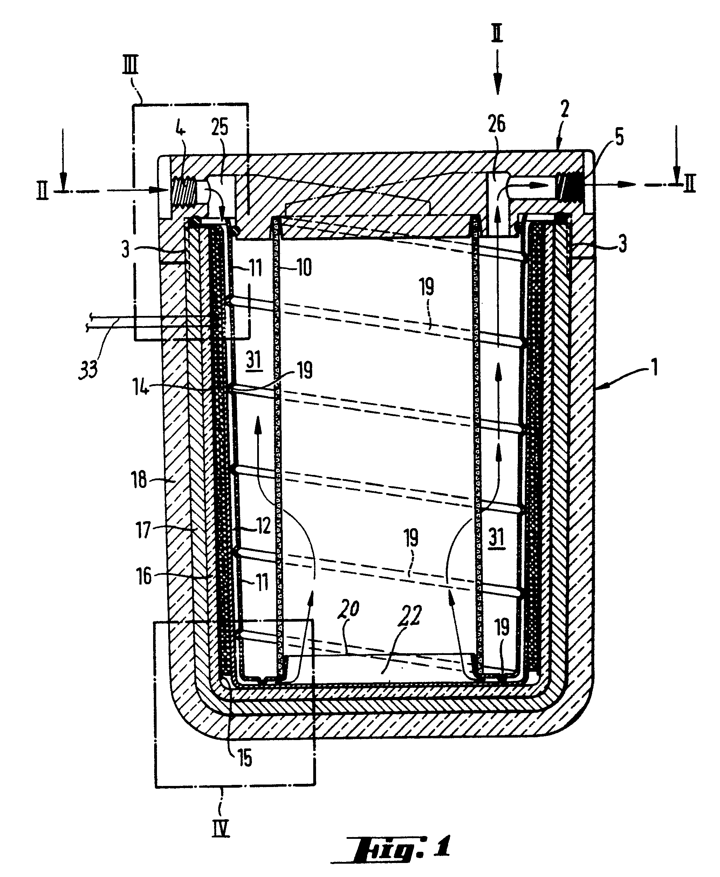

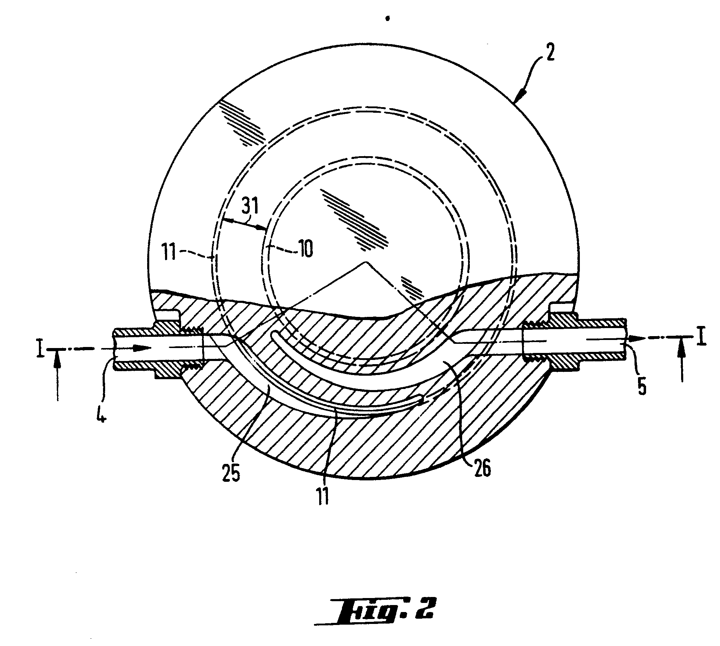

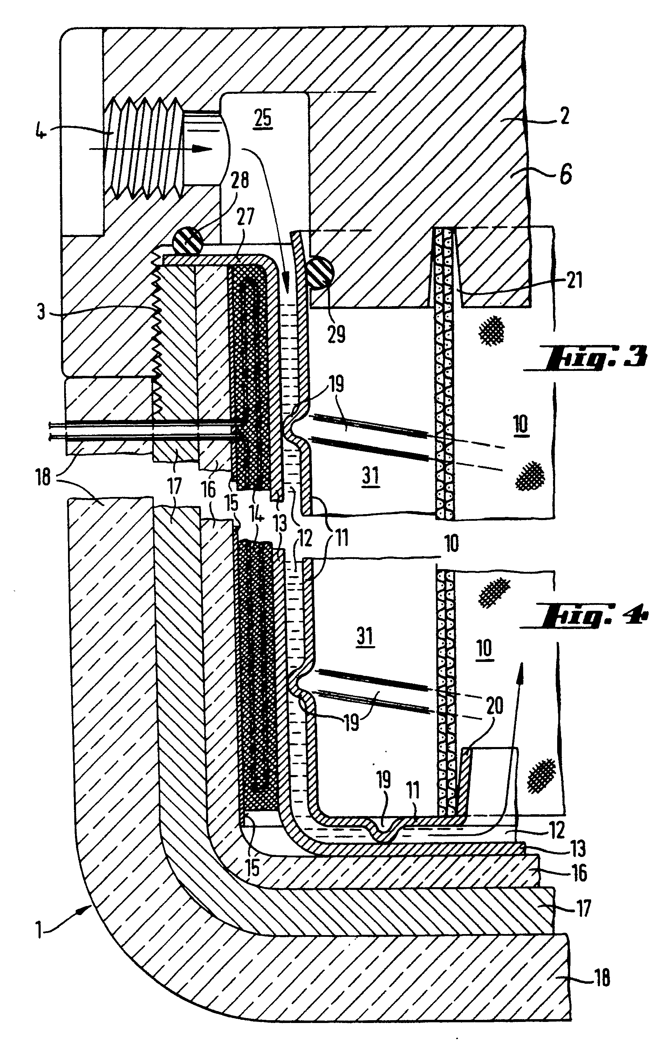

Der in den Fig. 1 bis 4 dargestellte Vorwärmer-Topf umfaßt ein Gehäuse 1 aus einem druckfesten Werkstoff, auf den ein Deckel 2, zweckmäßig über ein Schraubgewinde 3, aufgesetzt ist und den Gehäusetopf nach oben abschließt. Der Flüssigkeitszustrom erfolgt auf einer Seite durch einen Zuflußkanal 4, der sich in einem im Deckel 2 nach unten offenen Kanalbogen 25 fortsetzt und dadurch mit einem Heizraum 12 in Verbindung steht. Dieser Heizraum ist innenseitig von einem metallischen Leittopf 11, beispielsweise aus Kupfer, begrenzt. Seine Außenseite bildet ein Heiztopf 13, zweckmäßig ebenfalls aus Kupfer, der wiederum auf seiner Außenseite von einem Flächenheizelement 14 mit Anschlußleitungen 33 umschlossen ist, das eine Heizfolie bzw. -matte sein kann, bei der die Heizwiderstände auf einer Trägerfolie, z.B. durch Aufdruk-ken od. dgl., aufgebracht und in eine abdeckende Kunststoffolie eingebettet sind, so daß ein sich über die ganze Oberfläche gleichmäßig erwärmendes Heizelement von hoher Flexibilität vorliegt, das jeder Gestaltungsform angepaßt werden kann. Den Außenumfang des Heizelementes 14 umschließt beim Ausführungsbeispiel eine dünne Reflektionsfolie 15 mit einer auf der Innenseite reflektierenden Oberfläche, beispielsweise eine polierte Aluminiumfolie, damit die vom Heizelement 14 abgegebene Wärme nach innen reflektiert wird. Ein Isolierwand-Topf 16 aus Schaumstoff od. dgl. Isolierwerkstoff verhindert einen Wärmeverlust nach außen. Ein Gehäuse 17, zweckmäßig aus Aluminium, begrenzt schließlich den Vorwärmer-Topf nach außen, der zusätzlich noch durch eine Außenisolierung 18 abgedeckt sein kann. Wie die Querschnittszeichnungen erkennen lassen, sind die genannten Wände zu ineinanderfügbaren Töpfen bzw. Bechern tiefgezogen, wobei die Isolierungen 16 und 18, das Gehäuse 17 und der Heiztopf 13 mit einem geschlossenen Boden versehen sind, während der Leittopf 11 eine mittlere Bodenöffnung 22 mit einem hochstehenden Kragen 20 aufweist. Das Heizelement 14 sowie auch die eventuell vorhandene Reflexions folie 15 erstrecken sich nur auf den zylindrischen Teil des Vorwärmer-Topfes. Der Leittopf 11 weist gegen den Heiztopf 13 gerichtete Leitrippen 19 auf, die schraubenförmig in einem Abstand voneinander nach unten verlaufen, um so einen bandförmigen Durchflußkanal für einen dünnen Flüssigkeitsfilm zu bilden. Diese Leitrippen liegen am Heiztopf an und ermöglichen dadurch nur einen Durchfluß der Flüssigkeit entlang dieses so gebildeten schraubenförmigen Durchflußkanales. Während der Leittopf 11 nach oben stehend und eventuell leicht nach außen erweitert endet, um den Deckel 2 mit seinem Kern 6 unter Zwischenlage eines O-Ringes 29 abdichtend aufsetzen zu können, ist der Heiztopf 13 oben auf die außerhalb vorhandenen Topfwände zur Bildung eines Aufsetzflansches 27 umgelegt, damit auch hier mittels einer O-Ringdichtung 28 der Deckel 2 abgedichtet ist. Das dargestellte Ausführungsbeispiel zeigt zentral im Innern des Vorwärmer-Topfes einen Flüssigkeitsfilter in Form eines Filterzylinders 10, zweckmäßig von handelsüblicher Ausführung, der unten auf den Bodenkragen 20 aufgesetzt ist und oben in eine Ringnut 21 des Deckels 2 eingreift, so daß dieser Filterzylinder festsitzt. Wie aus Fig. 2 ersichtlich ist, ist im Deckel ein Abfluß-Kanalbogen 26 ausgebildet, der zum Abfluß-Sammelraum 31 zwischen Filterzylinder 10 und Leittopf 11 offen ist, um die gefilterte Flüssigkeit aufzunehmen und durch einen an den Abfluß-Kanalbogen anschließenden Abflußkanal 5 aus dem Vorwärmer-Topf zum Abfluß zu bringen. Die Stromzuleitung zum Heizelement ist mit 33 bezeichnet.

Die Wirkungsweise dieses Vorwärmer-Topfes ist folgende:

Die zu erwärmende Flüssigkeit, wie Brenn- oder Kraftstoff, tritt durch den Zuflußkanal 4 ein und gelangt über den Kanalbogen 25 in den Heizraum 12. Hierin wird die Flüssigkeit in dem schraubenförmigen Durchflußkanal nach unten geleitet und von der vom Heizelement 14 abgegebenen Wärme erwärmt. Dabei wird sie auch dünnflüssiger. Der schraubenförmige Durchflußkanal gewährleistet eine verhältnismäßig lange Heizstrecke, auf der die dünne Flüssigkeitsschicht rasch Wärme aufnimmt. Durch die Bodenöffnung 22 kann die erwärmte Flüssigkeit im Filterzylinder hochsteigen, durch die Filterschicht hindurchtreten und schließlich in den Abfluß-Sammelraum 31 gelangen, in dem die Flüssigkeit, beispielsweise unter dem Druck einer eingeschalteten Flüssigkeitspumpe, in den Abfluß-Kanalbogen 26 ansteigt und durch den Abflußkanal 5 zum Ausfluß gebracht wird. Auch wenn kein Filter eingebaut ist, ist ein Sammeln der erwärmten Flüssigkeit im Topf-Innenraum vorteilhaft, weil dadurch die vom Heizraum 12 durch den Leittopf 11 abströmende Wärme von dieser angesammelten Flüssigkeit aufgenommen wird, wie andererseits auch das im Topfinneren vorhandene Wärmepotential auch die Heizraumleistung fördert.

Der Vorwärmer-Topf läßt sich auf einfache Weise durch Tiefziehen der Einzelteile, zweckmäßig in leicht konischer Form, herstellen und zusammenbauen. Einer seiner besonderen Vorteile ist, daß darin ein Flüssigkeitsfilter untergebracht werden kann, ohne daß dadurch das Vorwärmgerät selbst vergrößert werden muß. Die Einzelteile sind leicht auseinandernehmbar, beispielsweise zu Reinigungszwecken, und damit auch auswechselbar.

**Patentansprüche**

1. Vorrichtung zum Erwärmen von Flüssigkeiten, insbesondere von flüssigen Brenn- oder Kraftstoffen, mit einem elektrisch beheizten zylindri-schen Flächenheizelement (14) eines Heiztop-fes (13), der zusammen mit einem Leittopf (11) mit schraubenförmig verlaufenden Leitrippen (19) einen von der zu erwärmenden Flüssigkeit

durchströmten schraubenförmigen Durchflußkanal durch einen Heizraum (12) bildet, wobei der Leittopf und der Heiztopf ineinander angeordnet sind, dadurch gekennzeichnet, daß dem Heiztopf (13) auf seiner Außenseite das Flächenheizelement (14) und auf seiner Innenseite der Leittopf (11) mit einer Bodenöffnung zum Durchfluß der erwärmten Flüssigkeit in das Leittopfinnere zugeordnet ist und daß an den offenen Enden der beiden Töpfe (11,13) ein lösbarer Deckel (2) mit einem Zufluß- und einem Abflußkanal (4,5) für die Flüssigkeit ausgebildet ist.

2. Vorrichtung nach Anspruch 1, dadurch gekennzeichnet, daß das Flächenheizelement (14) außen durch eine nach innen reflektierende Reflektionsfolie (15) abgedeckt ist.

3. Vorrichtung nach einem der Ansprüche 1 und 2, dadurch gekennzeichnet, daß das Flächenheizelement (14) außen von einem Isolierwand-Topf (16) und einem Gehäuse (17) umschlossen ist.

4. Vorrichtung nach einem der Ansprüche 1 bis 3, dadurch gekennzeichnet, daß zwischen dem Flächenheizelement (14) und dem Isolierwand-Topf (16) die nach innen reflektierende Reflektionsfolie (15) vorgesehen ist.

5. Vorrichtung nach einem der Ansprüche 1 bis 4, dadurch gekennzeichnet, daß der Zuflußkanal (4) in einen im Deckel (2) zum Heizraum (12) hin offenen ausgebildeten Kanalbogen (25) und der Abflußkanal (5) in einen im Deckel (2) zum Abfluß-Sammelraum (31) hin offenen ausgebildeten Abfluß-Kanalbogen (26) übergeht (Fig. 2).

6. Vorrichtung nach einem der Ansprüche 1 bis 5, dadurch gekennzeichnet, daß der Leittopf-Innenraum zur Aufnahme eines Flüssigkeitsfilters ausgebildet ist.

7. Vorrichtung nach Anspruch 6, dadurch gekennzeichnet, daß der Flüssigkeitsfilter ein Filterzylinder (10) ist, der mit einem Ende auf einem die Bodenöffnung (22) umgebenden Kragen (20) aufgesetzt ist und mit dem anderen Ende in eine Ringnut (21) des Deckels (2) eingreift.

## Claims

1. A device for heating liquids, in particular combustibles or liquid fuels, having a heating container (13) of which a cylindrical surface is electrically heated by a heating element (14), the heating container together with a guide unit (11) that has helically extending guide ribs (19) forming a helical flow path for the liquid to be heated in flowing through a heating chamber (12), the guide unit and the heating container being arranged one in another, characterised in that associated with the heating container (13) there are, on its outside, the surface heating element (14) and, on its inside, the guide unit (11), there being a base aperture for flow-through of heated liquid into the interior of the guide unit, and in that formed at the open ends of the heating container (13) and guide unit (11) there is a releasable cover with flow-entry and a flow-exit ports (4, 5) for the liquid.

2. A device according to claim 1, characterised in that the surface heating element (14) is covered on its outside by an inwardly reflecting foil (15).

3. A device according to one of claims 1 and 2, characterised in that the surface heating element (14) is enclosed outside by an insulating-walled container (16) and a housing (17).

4. A device according to one of claims 1 to 3, characterised in that the inwardly reflecting reflection foil (15) is provided between the surface heating element (14) and the insulating-walled container (16).

5. A device according to any one of claims 1 to 4, characterised in that the flow-entry port (4) communicates with a curved passage (25) formed in the cover (2) open towards the heating chamber (12) and the flow-exit port (5) communicates with a curved passage (26) formed in the cover (2) open towards a flow-out collecting chamber (31) (Fig. 2).

6. A device according to any one of claims 1 to 5, characterised in that the interior of the guide unit is adapted for reception of a liquid filter.

7. A device according to claim 6, characterised in that the liquid filter is a filter cylinder (10) having one end superimposed on a collar (20) surrounding the base aperture (22) and with the other end engaged in an annular groove (21) of the cover (2).

## Revendications

1. Dispositif pour réchauffer des liquides, on particulier des combustibles ou carburants liquides, comprenant un élément chauffant plat (14) de forme cylindrique, chauffé électriquement, appartenant à un godet chauffant (13) qui forme, avec un godet guide (11) muni de nervures guides (19) hélicoïdales, un conduit de passage hélicoïdal parcouru par le liquide à réchauffer, à travers une chambre de chauffage (12), le godet guide et le godet chauffant étant disposés l'un à l'intérieur de l'autre, caractérisé par le fait que l'élément chauffant plat (14) est prévu sur la surface extérieure du godet chauffant (13) et le godet guide (11), muni d'une ouverture de fond qui permet au liquide chauffé de pénétrer dans le volume intérieur du godet guide, est prévu sur la surface intérieure du godet chauffant, et en ce qu'aux extrémités ouvertes des deux godets (11, 13) est prévu un couvercle amovible (2) muni d'un conduit d'arrivée et d'un conduit de départ (4, 5) pour la circulation du liquide.

2. Dispositif selon la revendication 1, caractérisé par le fait que l'élément chauffant plat (14) est recouvert extérieurement d'une feuille réfléchissante (15) qui réfléchit vers l'intérieur.

3. Dispositif selon une des revendications 1 et 2, caractérisé par le fait que l'élément chauffant plat (14) est entouré extérieurement par un godet (16) formant paroi isolante et par un boîtier (17).

4. Dispositif selon une des revendications 1 à 3, caractérisé par le fait que la feuille réfléchissante (15) qui réfléchit vers l'intérieur est prévue entre l'élément chauffant plat (14) et le godet (16) formant paroi isolante.

5. Dispositif selon une des revendications 1 à 4, caractérisé par le fait que le conduit d'arrivée (4) débouche dans un coude de conduit (25) formé dans le couvercle (2) et qui s'ouvre sur la chambre de chauffage (12), et le conduit de départ (5) débouche dans un coude de conduit de départ (26) formé dans le couvercle (2) et qui s'ouvre sur la chambre collectrice de départ (31) (figure 2).

6. Dispositif selon une des revendications 1 à 5, caractérisé en ce que le volume intérieur du godet guide est conformé pour recevoir un filtre à liquide.

7. Dispositif selon la revendication 6, caractérisé par le fait que le filtre à liquide est un cylindre filtrant (10) qui est appuyé par une extrémité sur un collet (20) qui entoure l'ouverture (22) du fond, et engagé par son autre extrémité dans une rainure annulaire (21) du

couvercle (2).

*Fig. 1*

Fig. 2

7

**Fig. 3**

**Fig. 4**